# EUROPÄISCHE PATENTSCHRIFT

(11) **EP 0 407 831 B1**
(45) Veröffentlichungstag und Bekanntmachung des Hinweises auf die Patenterteilung: **30.03.1994**
(21) Anmeldenummer: 90112406.5
(22) Anmeldetag: 29.06.1990
(51) Int. Cl.: C09B 67/50

(54) **Verfahren zur Herstellung von farbstarken, transparenten und leicht dispergierbaren Kupferphthalocyaninpigmenten der beta-Modifikation**
Method of preparing colour intensive, transparent and easily dispersible copper phthalocyanines
Procédé de préparation de phthalocyanines du cuivre à couleur intense, transparents et faciles à disperser

(30) Priorität: 11.07.1989 DE 3922734
(43) Veröffentlichungstag der Anmeldung: 16.01.1991
(73) Patentinhaber: BASF Aktiengesellschaft, 67063 Ludwigshafen (DE)
(72) Erfinder: Roth, Karl, D-6703 Limburgerhof (DE); Polster, Rudolf, Dr., D-6710 Frankenthal (DE)

(56) Entgegenhaltungen:
- DD-A- 243 182
- DE-A- 2 439 983
- DE-A- 2 707 071

## Beschreibung

In der Regel wird Kupferphthalocyanin (CuPc) bei der Synthese in einer koloristisch wertlosen grobkristallinen Form erhalten. Die Oberfläche solcher Rohpigmente ist sehr klein (BET-Oberfläche < 6 m²/g) und die Verteilung der Teilchengrößen sehr heterogen. Für eine koloristische Anwendung müssen daher die Rohpigmente in koloristisch wertvolle Pigmentformen überführt werden. Dies kann z.B. durch Behandeln des Roh-CuPc mit konzentrierter Schwefelsäure und Austragen auf Wasser, durch Mahlen des Roh-CuPc mit Salz und Entfernen des Salzes oder durch Mahlen des Roh-CuPc ohne Salz und Rekristallisieren des Mahlgutes erfolgen. Aus ökologischen Gründen ist das Mahlen in Abwesenheit von Salz bevorzugt. Nachteilig ist bei diesem Mahlverfahren, daß hier in der Regel ein hoher Anteil der α-Modifikation im Mahlgut entsteht, so daß bei der nachfolgenden Rekristallisation nadelförmige Pigmentteilchen gebildet werden, weshalb solche Pigmente ein schlechtes Fließverhalten in Lacken und Druckfarben zeigen.

In der DE-A-24 39 983 ist die Herstellung von leicht dispergierbaren β-CuPc-Pigmenten durch Mahlung von hochreinem CuPc in Gegenwart eines Phthalocyaninderivates in einem organischen Lösungsmittel beschrieben.

Aufgabe der Erfindung war es, CuPc-Pigmente bereitzustellen, die im wesentlichen aus isometrischen Pigmentteilchen bestehen.

Die Aufgabe wird mit Hilfe des Verfahrens gemäß der vorliegenden Erfindung gelöst.

Die Erfindung betrifft ein Verfahren zur Herstellung von farbstarken, transparenten und leicht dispergierbaren Kupferphthalocyaninpigmenten der β-Modifikation durch Mahlen von rohem Kupferphthalocyanin in Abwesenheit von Mahlhilfsmitteln und folgender Rekristallisation des Mahlgutes in wäßrig-organischer Phase, das dadurch gekennzeichnet ist, daß das Rohpigment in Gegenwart von 1 bis 10 Gew.%, bezogen auf das Rohpigment, einer organischen Flüssigkeit bei Temperaturen von 90 bis 140°C gemahlen wird.

Das beim Mahlen gemäß der Erfindung anfallende Mahlgut enthält nur geringe Anteile an der α-Modifikation. Bei der Rekristallisation erhält man Pigmente, die im wesentlichen aus isometrischen Teilchen bestehen. Die mit diesen Pigmenten hergestellen Lacke und Druckfarben zeigen im Vergleich zu Farben, die mit Pigmenten auf der Basis von Trockenmahlprodukten erhalten werden, ein deutlich verbessertes Fließverhalten.

Die nach dem Verfahren der Erfindung erhaltenen CuPc-Pigmente sind hervorragend zur Pigmentierung von Druckfarben, von Kunststoffen und von Anstrichfarben geeignet.

Das Mahlen gemäß dem Verfahren der Erfindung erfolgt in Kugelmühlen oder in entsprechend wirkenden Mahlaggregaten, wie Attritoren.

Die Menge an organischer Flüssigkeit beträgt 1 bis 10 Gew.%, bezogen auf rohes CuPc. Vorzugsweise wendet man 2 bis 5 Gew.% an. Die Menge ist so gering, daß das Roh-CuPc und das Mahlprodukt pulverförmig bleiben. In der Regel wird man das Gemisch aus dem Roh-CuPc und der organischen Flüssigkeit in die Mühle eintragen und dann das Mahlen beginnen.

Als organische Flüssigkeiten kommen solche in Betracht, die eine möglichst hohe Zündtemperatur besitzen. Für diesen Zweck kommen z.B. Halogenbenzol wie Dichlor- und Trichlorbenzol, Nitrobenzol, Benzoesäure-C₁-C₄-alkyl-ester, Ethylenglykol, Diethylenglykol, Butoxyethanol, Phenoxyethanol, Ethylenglykolacetat, Ethylenglykoldiacetat oder Gemische dieser Flüssigkeiten in Betracht. Aus ökologischen Gründen sind Diethylenglykol, Butoxyethanol, Phenoxyethanol, Ethylenglykolacetat, Ethylenglykodiacetat oder Gemische dieser Flüssigkeiten bevorzugt.

Weiterhin sind z.B. C₁- bis C₁₂-Alkylphthalsäurediester sehr brauchbar.

Als organische Flüssigkeit ist Phenoxyethanol besonders bevorzugt.

Durch die beim Mahlen zugeführte Energie erwärmt sich der Mühleninhalt auf Temperaturen von 90 bis 140°C.

Das Mahlen wird fortgeführt, bis das Mahlgut aus Agglomeraten besteht, die aus 0,01 bis 0,02 µm großen Primärteilchen aufgebaut sind. In der Regel wird dieser Zustand nach 12 bis 48 Stunden erreicht.

Das Mahlgut wird dann in wäßrig-organischer Phase nach an sich bekannten Verfahren in die Pigmentform überführt (rekristallisiert). Für den organischen Anteil in der wäßrig-organischen Phase kommen die bekannten Lösungsmittel, die mit Wasser zumindest partiell mischbar sind, in Betracht, z.B. C₃- bis C₆-Ketone, C₃- bis C₅-Alkanole, Tetrahydrofuran und Ethylenglykolmono-C₃-C₅-alkylether. Im Falle des Verfahrens der Erfindung ist n-Butoxyethanol bevorzugt.

Bei Verwendung von wäßrig-organischen Phasen mit organischen Lösungsmitteln, die mit Wasser eine Mischungslücke aufweisen, kann die Rekristallisation so geführt werden, daß das Pigment am Ende der Kristallisation in der wäßrig-organischen Phase in Form eines Perlgranulates anfällt. Das Pigment kann in diesem Fall von der wäßrig-organischen Phase abgesiebt werden.

Nach dem Trocknen erhält man ein staubfreies und rieselfähiges Produkt.

Das Pigment kann aber auch - gegebenenfalls nach dem Verdünnen mit Wasser - in üblicher Weise durch Filtrieren isoliert und getrocknet werden.

Das Verfahren gemäß der Erfindung soll durch die folgenden Beispiele zusätzlich erläutert werden.

### Beispiel 1 (Pigment 1)

a) In einer 10-m³-Kugelmühle mit 15 t Stahlkugeln (25 bis 28 mm ∅) wurden
   1200 kg Roh-Kupferphthalocyanin ber. 100 % und
   24 kg Phenoxyethanol
   24 Stunden bei 110°C gemahlen.
   Man erhielt ein Mahlgut aus 0,5 bis 200 µm großen Agglomeraten, die aus 0,01 bis 0,02 µm großen Primärteilchen aufgebaut waren. Das Mahlgut lag nach dem Mahlen durch den Einfluß des Lösungsmittels hauptsächlich in der β-Modifikation vor.
b) 102 Tl. des nach a) erhaltenen Mahlgutes wurden mit
   80 Tl. Filterwasser und
   40 Tl. Butoxyethanol verrührt, anschließend auf 95/96°C erhitzt und 8 Stunden bei dieser Temperatur formiert. Dabei bildete sich ein Perlgranulat (Mischungslücke).
   Das Granulat konnte entweder über ein Sieb gewonnen werden (staubfreie Form), oder man gab Filterwasser zu, wodurch die Perlen zerfallen, und isolierte das Pigment auf einer Filterpresse. Man erhielt ein Pigment, das weitgehend aus isometrischen Teilchen bestand und dadurch ein sehr gutes Fließverhalten in Druckfarben aufwies.

### Vergleich 1

Es wurde wie unter Beispiel 1a) angegeben verfahren, jedoch wurde in Abwesenheit von Phenoxyethanol gemahlen. Das Mahlgut wurde, wie unter Beispiel 1b) angegeben, in die Pigmentform überführt.

Eine mit Pigment 1 hergestellte Druckfarbe (Pigmentgehalt: 16 Gew.%) hatte im DIN-Becher (4 mm Düse) eine Auslaufzeit von 22 sec.

Demgegenüber hatte eine Druckfarbe mit dem Vergleich 1 bei gleichem Pigmentgehalt eine Auslaufzeit von > 40 sec.

### Beispiel 2 (Pigment 2)

a) In einer 10-m³-Kugelmühle mit 13 t Stahlkugeln (∅ 25 bis 28 mm) wurden
   1200 kg Roh-Kupferphthalocyanin ber. 100 %,
   60 kg H₂SO₄ und
   30 kg Phenoxyethanol
   35 Stunden bei 110°C gemahlen.
   Man erhielt ein aus Agglomeraten bestehendes Mahlgut, das aus Primärteilchen von 0,01 bis 0,02 µm aufgebaut war. Das Mahlgut war ein Gemisch aus α- und β-CuPc. Der Anteil an α-CuPc lag unterhalb 50 Gew.%.
b) 108 Tl. des nach a) erhaltenen Mahlgutes wurden mit
   80 Tl. Filterwasser und
   40 Tl. Butoxyethanol verrührt, anschließend auf 95/96°C erhitzt und 8 Stunden bei dieser Temperatur formiert. Dabei bildete sich ein Perlgranulat (Mischungslücke).
   Das Granulat konnte abgesiebt und getrocknet werden. Man erhielt ein Perlgranulat (staubfreie Form). Man konnte aber auch so aufarbeiten: Durch Zugeben von Wasser zerfielen die Granulate. Das Pigment wurde auf einer Filterpresse abfiltriert und getrocknet.

### Vergleich 2

Es wurde wie in Beispiel 2a) verfahren, jedoch wurde in Abwesenheit von Phenoxyethanol gemahlen. Das Mahlgut bestand zu mehr als 80 Gew.% aus α-CuPc.

Dieses Mahlgut wurde wie in Beispiel 2b) angegeben in die Pigmentform überführt.

Eine mit dem Pigment 2 hergestellte Druckfarbe wies im Vergleich mit einer Druckfarbe, die den Vergleich 2 als Pigment enthielt, ein deutlich besseres Fließverhalten auf.

Wendete man bei dem Mahlen gemäß den Beispielen 1 oder 2 anstelle von Phenoxyethanol oder Butoxyethanol, Diethylenglykol, N-Methylpyrrolidon, Phthalsäurediester oder Ethylenglykolacetate oder Gemische dieser Lösungsmittel an, so erhielt man praktisch die gleichen Mahlprodukte.

## Patentansprüche

1. Verfahren Zur Herstellung von farbstarken, transparenten und leicht dispergierbaren Kupferphthalocyaninpigmenten der β-Modifikation durch Mahlen von rohem Kupferphthalocyanin in Abwesenheit von Mahlhilfsmitteln und folgender Rekristallisation des Mahlgutes in wäßrig-organischer Phase, dadurch gekennzeichnet, daß das Rohpigment in Gegenwart von 1 bis 10 Gew.%, bezogen auf das Rohpigment, einer organischen Flüssigkeit bei Temperaturen von 90 bis 140°C gemahlen wird.

2. Verfahren gemäß Anspruch 1, dadurch gekennzeichnet, daß die Menge an der organischen Flüssigkeit 2 bis 5 Gew.%, bezogen auf Rohpigment, beträgt.

3. Verfahren gemäß Anspruch 1 oder 2, dadurch gekennzeichnet, daß das Mahlen bei 100 bis 120°C erfolgt.

4. Verfahren gemäß Anspruch 1, 2 oder 3, dadurch gekennzeichnet, daß als organische Flüssigkeit N-Methylpyrrolidon, Diethylenglykol, Butoxyethanol, Phenoxyethanol, Ethylenglykolacetat, Ethylenglykoldiacetat, Gemische davon oder C₁- bis C₁₂-Alkylphthalsäurediester verwendet.

## Claims

1. A process for preparing a strong, transparent and readily dispersible copper phthalocyanine pigment of the β-modification by grinding crude copper phthalocyanine in the absence of any grinding aids and then recrystallizing the mill base in an aqueous organic phase, which comprises grinding the crude pigment in the presence of from 1 to 10% by weight, based on the crude pigment, of an organic liquid at from 90 to 140°C.

2. A process as claimed in claim 1, wherein the amount of organic liquid is from 2 to 5% by weight, based on crude pigment.

3. A process as claimed in claim 1 or 2, wherein the grinding takes place at from 100 to 120°C.

4. A process as claimed in claim 1 or 2 or 3, wherein the organic liquid used is N-methylpyrrolidone, diethylene glycol, butoxyethanol, phenoxyethanol, ethylene glycol acetate, ethylene glycol diacetate or a mixture thereof, or a di-C₁-C₁₂-alkyl phthalate.

## Revendications

1. Procédé de préparation de pigments de phtalocyanine de cuivre de modification β, à pouvoir colorant, transparents et facilement dispersibles, par broyage de phtalocyanine de cuivre brute en l'absence d'auxiliaires de broyage, et recristallisation subséquente de la matière broyée en phase aqueuseorganique, caractérisé en ce que le pigment brut est broyé en présence de 1 à 10% en poids par rapport au pigment brut, d'un liquide organique, à des températures comprises entre 90 et 140°C.

2. Procédé selon la revendication 1, caractérisé en ce que la quantité de liquide organique est de 2 à 5% en poids par rapport au pigment brut.

3. Procédé selon la revendication 1 ou 2, caractérisé en ce que le broyage est effectué a une température comprise entre 100 et 120°C.

4. Procédé selon l'une des revendications 1, 2 au 3, caractérisé en ce que l'on utilise comme liquide organique les N-méthylpyrrolidone, diéthylèneglycol, butoxyéthanol, phénoxyéthanol, acétate d'éthylèneglycol, diacétate d'éthylèneglycol, des mélanges de ceux-ci ou un diester d'alkyle en C₁-C₁₂ de l'acide phtalique.
